(19) **Europäisches Patentamt / European Patent Office / Office européen des brevets**

(11) **EP 4 570 985 A1**

(12) **EUROPEAN PATENT APPLICATION**
published in accordance with Art. 153(4) EPC

(43) Date of publication:
**18.06.2025 Bulletin 2025/25**

(21) Application number: **23852346.8**

(22) Date of filing: **24.07.2023**

(51) International Patent Classification (IPC):
*D06M 15/564* (2006.01)   *C03C 25/10* (2018.01)
*C08G 18/00* (2006.01)   *C08G 18/08* (2006.01)
*C08G 18/40* (2006.01)   *C08G 18/73* (2006.01)
*C08G 18/75* (2006.01)

(52) Cooperative Patent Classification (CPC):
**C03C 25/10; C08G 18/00; C08G 18/08;**
**C08G 18/40; C08G 18/73; C08G 18/75;**
**D06M 15/564**

(86) International application number:
**PCT/JP2023/026929**

(87) International publication number:
**WO 2024/034370 (15.02.2024 Gazette 2024/07)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **08.08.2022 JP 2022126530**

(71) Applicant: **DKS Co. Ltd.**
**Kyoto-shi, Kyoto 600-8873 (JP)**

(72) Inventors:
• **SHIREN, Minari**
**kyoto-shi, Kyoto 600-8873 (JP)**
• **UEDA, Ryoji**
**kyoto-shi, Kyoto 600-8873 (JP)**
• **MIZUKAMI, Shinya**
**kyoto-shi, Kyoto 600-8873 (JP)**

(74) Representative: **Kuhnen & Wacker**
**Patent- und Rechtsanwaltsbüro PartG mbB**
**Prinz-Ludwig-Straße 40A**
**85354 Freising (DE)**

(54) **FIBER SIZING AGENT**

(57) Provided is a technique for achieving sizing properties and also achieving a storage stability of an aqueous dispersion of a polyurethane resin that is used in a fiber sizing agent.

A fiber sizing agent includes an aqueous dispersion of a polyurethane resin, and the polyurethane resin includes, as constituent components, a polyol (a) component containing no sulfonic acid group or sulfonate group; a polyisocyanate (b) component; and a compound (c) component containing at least one of a sulfonic acid group or a sulfonate group and containing an active hydrogen group. The polyol (a) component includes a polyester polyol (a1) and a polyether polyol (a2), and the component of the polyether polyol (a2) is present in an amount of 10 parts by mass or greater and 30 parts by mass or less per 100 parts by mass of the total amount of the polyol (a) component, the polyisocyanate (b) component, and the compound (c) component.

EP 4 570 985 A1

## Description

Technical Field

The present invention relates to a fiber sizing agent.

Background Art

In the related art, fiber sizing agents are known regarding the kneading of a fiber material with a matrix resin; the fiber sizing agents enable the bundling of a fiber material by inhibiting fraying of the fiber material due to friction (e.g., Patent Literature 1).

Patent Literature 1 describes a glass fiber sizing agent, which is a type of fiber sizing agent. The glass fiber sizing agent includes an aqueous dispersion of a polyurethane resin prepared by reacting (i) 86.4 parts by mass of a polyester polyol having a number average molecular weight of 2000, the polyester polyol being prepared from a diol and a dicarboxylic acid, where the diol is a neopentyl glycol, and the dicarboxylic acid is a mixture of adipic acid and terephthalic acid (molar ratio: 1/1), (ii) 2 parts by mass of a polyethylene glycol having a number average molecular weight of 600, (iii) 11 parts by mass of hexamethylene diisocyanate, (iv) 0.6 parts by mass of sodium aminoethylsulfonic acid, (v) 6 parts by mass of polyoxyethylene-polyoxypropylene glycol, (vi) 0.63 parts by mass of diethylenetriamine, and (vii) 0.08 parts by mass of ethylenediamine, with one another.

Citation List

Patent Literature

PTL 1: Japanese Unexamined Patent Application Publication No. 2013-253364

Summary of Invention

Technical Problem

In general, excellent storage stability of an aqueous dispersion of a polyurethane resin is preferable from the standpoint of improving a degree of freedom for the production of fiber sizing agents. Regarding the glass fiber sizing agent described in Patent Literature 1, however, the inventors of the present application found that although the sizing properties of the fiber sizing agent are excellent, the storage stability of the aqueous dispersion of the polyurethane resin has room for improvement. Accordingly, there is a need for the development of a technique that enables fiber sizing agents containing a polyurethane resin to have excellent sizing properties and also enables the aqueous dispersion of a polyurethane resin used in the fiber sizing agents to have excellent storage stability.

Solution to Problem

The present invention has been made to achieve the object described above and can be embodied in the following aspects.

(1) According to one aspect of the present invention, a fiber sizing agent is provided. This fiber sizing agent includes an aqueous dispersion of a polyurethane resin, and the polyurethane resin includes, as constituent components, a polyol (a) component containing no sulfonic acid group or sulfonate group; a polyisocyanate (b) component; and a compound (c) component containing at least one of a sulfonic acid group or a sulfonate group and containing an active hydrogen group. The polyol (a) component includes a polyester polyol (a1) and a polyether polyol (a2), and a component of the polyether polyol (a2) is present in an amount of 10 parts by mass or greater and 30 parts by mass or less per 100 parts by mass of a total amount of the polyol (a) component, the polyisocyanate (b) component, and the compound (c) component.
The fiber sizing agent of this aspect has excellent sizing properties, and the aqueous dispersion of the polyurethane resin used in the fiber sizing agent has excellent storage stability.
(2) In the fiber sizing agent according to (1), a mass ratio (a1/a2) of a component of the polyester polyol (a1) to the component of the polyether polyol (a2) may be 2.0 or greater and 8.0 or less.
The fiber sizing agent of this aspect has excellent storage stability of the aqueous dispersion of the polyurethane resin.
(3) In the fiber sizing agent according to (1) or (2), the polyisocyanate (b) component may include at least one of an aliphatic polyisocyanate or an alicyclic polyisocyanate.

The fiber sizing agent of this aspect has excellent sizing properties and excellent yellowing resistance.

(4) In the fiber sizing agent according to any one of (1) to (3), a ratio of isocyanate groups present in the polyisocyanate (b) component to 1 mole of total active hydrogen groups present in the polyol (a) component and the compound (c) component may be 1.01 moles or greater and 2 moles or less.

The fiber sizing agent of this aspect has enhanced sizing properties.

(5) In the fiber sizing agent according to any one of (1) to (4), the polyurethane resin may be substantially free of any polyamine component.

The fiber sizing agent of this aspect has enhanced sizing properties.

(6) The fiber sizing agent according to any one of (1) to (5) may be for use in a glass fiber.

Note that the present invention can be embodied in various aspects and, for example, can be embodied in the form of a glass fiber sizing agent, a fiber containing a fiber sizing agent, or the like.

Description of Embodiments

<Fiber Sizing Agent>

According to an embodiment of the present invention, a fiber sizing agent includes an aqueous dispersion of a polyurethane resin. The polyurethane resin of the present embodiment includes, as constituent components, (i) a polyol (a) component containing no sulfonic acid group or sulfonate group, (ii) a polyisocyanate (b) component, and (iii) a compound (c) component containing at least one of a sulfonic acid group or a sulfonate group and containing an active hydrogen group. The polyol (a) component includes a polyester polyol (a1) and a polyether polyol (a2). The component of the polyether polyol (a2) is present in an amount of 10 parts by mass or greater and 30 parts by mass or less per 100 parts by mass of the total amount of the polyol (a) component, the polyisocyanate (b) component, and the compound (c) component.

The fiber sizing agent of the present embodiment has excellent sizing properties, and the aqueous dispersion of the polyurethane resin used in the fiber sizing agent has excellent storage stability.

The polyurethane resin of the present embodiment can be prepared by reacting (i) a polyol (a) containing no sulfonic acid group or sulfonate group, (ii) a polyisocyanate (b), and (iii) a compound (c) containing at least one of a sulfonic acid group or a sulfonate group and containing an active hydrogen group, with one another.

The polyol (a), the polyisocyanate (b), and the compound (c) react with one another, each becoming a constituent element of the polyurethane resin. That is, the polyol (a), the polyisocyanate (b), and the compound (c) are constituent components of the polyurethane resin.

The polyether polyol (a2) may be used in a starting amount of 10 parts by mass or greater and 30 parts by mass or less per 100 parts by mass of the total starting amount of the polyol (a), the polyisocyanate (b), and the compound (c). In this case, it is anticipated that the component of the polyether polyol (a2), as one of the constituent components of the cured product, which is the polyurethane resin, can be present in an amount of 10 parts by mass or greater and 30 parts by mass or less per 100 parts by mass of the total amount of the polyol (a) component, the polyisocyanate (b) component, and the compound (c) component.

<Polyol (a)>

The polyol (a) that is used in the polyurethane resin of the present embodiment is a polyol containing no sulfonic acid group or sulfonate group. In the present specification, the sulfonic acid group can be represented by $-SO_3H$. The sulfonate group can be represented by $-(SO_3^-)_n X^{n+}$. In the formula, n is an integer of 1 to 3, and n is preferably 1. Examples of $X^{n+}$ include, but are not limited to, monovalent or polyvalent metal ions. Of these, monovalent metal ions are preferable, a sodium ion and a potassium ion are more preferable, and a sodium ion is even more preferable. $X^{n+}$ may be a primary, secondary, tertiary, or quaternary ammonium cation and, in particular, is preferably an ammonium ion.

The polyol (a) that is used in the polyurethane resin of the present embodiment includes the polyester polyol (a1) and the polyether polyol (a2).

The polyester polyol (a1) is not particularly limited as long as it is a polyester polyol containing no sulfonic acid group or sulfonate group. The polyester polyol (a1) can be prepared, for example, by reacting a diol with a dicarboxylic acid or a derivative thereof with a method known in the art.

Examples of the diol include, but are not limited to, aliphatic diols and aromatic diols. Examples of the aliphatic diols include, but are not limited to, ethylene glycol, 1,2-propylene glycol, 1,3-propylene glycol, 1,3-butanediol, 1,4-butanediol, 1,5-pentanediol, 2-methyl-1,4-butanediol, neopentyl glycol, 1,6-hexanediol, 2-methyl-1,5-pentanediol, and 3-methyl-1,5-pentanediol. Examples of the aromatic diols include, but are not limited to, bisphenol A, bisphenol F, bisphenol S, and alkylene oxide adducts of any of these. Of these, aliphatic diols are preferable, aliphatic diols having 2 to 10 carbon atoms are more preferable, and aliphatic diols having 2 to 8 carbon atoms are even more preferable.

Examples of the dicarboxylic acid include, but are not limited to, aliphatic dicarboxylic acids and aromatic dicarboxylic acids. Examples of the aliphatic dicarboxylic acids include, but are not limited to, saturated aliphatic dicarboxylic acids, such as propanedioic acid, butanedioic acid, pentanedioic acid, hexanedioic acid, heptanedioic acid, octanedioic acid, nonanedioic acid, and decanedioic acid; and unsaturated aliphatic dicarboxylic acids, such as maleic acid and itaconic acid. Examples of the aromatic dicarboxylic acids include, but are not limited to, phthalic acid, isophthalic acid, and terephthalic acid. These dicarboxylic acids may be derivatives of carboxylic acids. Examples of such derivatives include dialkyl esters, such as dimethyl esters and diethyl esters, of any of the dicarboxylic acids mentioned above as examples. From the standpoint of providing excellent thermal stability, it is preferable that the dicarboxylic acid be an aromatic dicarboxylic acid or a derivative thereof. From the standpoint of providing excellent sizing properties, it is preferable that the dicarboxylic acid be a combination of an aliphatic dicarboxylic acid and an aromatic dicarboxylic acid. In the instance where an aliphatic dicarboxylic acid and an aromatic dicarboxylic acid are used in combination, the ratios of the aliphatic dicarboxylic acid and the aromatic dicarboxylic acid are not particularly limited; preferably, the aliphatic dicarboxylic acid is present in an amount of 0.5 to 1.5 moles per mole of the aromatic dicarboxylic acid.

As constituent components of the polyester polyol (a1), a triol may be used, and/or a tricarboxylic acid or a derivative thereof may be used, as long as the effects of the present invention are not hindered.

Without limitation, the polyester polyol (a1) preferably has a number average molecular weight of 500 or greater and more preferably 1000 or greater. Furthermore, the number average molecular weight of the polyester polyol (a1) is preferably 4000 or less and more preferably 3000 or less. When the number average molecular weight is within any of these ranges, excellent sizing properties are achieved.

The polyether polyol (a2) is not particularly limited as long as it is a polyether polyol containing no sulfonic acid group or sulfonate group. The polyether polyol (a2) can be prepared, for example, by reacting a polyol with an alkylene oxide with a method known in the art. Examples of the polyol include, but are not limited to, polyols containing two hydroxy groups and polyols containing three or more hydroxy groups. Examples of the polyols containing two hydroxy groups include, but are not limited to, ethylene glycol, 1,2-propylene glycol, 1,3-propylene glycol, 1,3-butanediol, 1,4-butanediol, 1,5-pentanediol, 2-methyl-1,4-butanediol, neopentyl glycol, 1,6-hexanediol, 2-methyl-1,5-pentanediol, and 3-methyl-1,5-pentanediol, bisphenol A, bisphenol F, and bisphenol S. Examples of the polyols containing three or more hydroxy groups include, but are not limited to, glycerin, trimethylolpropane, pentaerythritol, sorbitol, and sucrose. Of these, polyols containing two hydroxy groups are preferable, polyols containing two hydroxy groups and having 2 to 6 carbon atoms are more preferable, and polyols containing two hydroxy groups and having 2 or 3 carbon atoms are even more preferable. Examples of the alkylene oxide include, but are not limited to, ethylene oxide, propylene oxide, and butylene oxide.

From the standpoint of providing excellent thermal stability, it is preferable that the polyether polyol (a2) contain an ethylene oxide component. The polyether polyol (a2) is more preferably a polyethylene glycol or a polyoxyethylene-polyoxypropylene glycol and even more preferably a polyoxyethylene-polyoxypropylene glycol.

Without limitation, the polyether polyol (a2) preferably has a number average molecular weight of 200 or greater, more preferably 300 or greater, and even more preferably 400 or greater. Furthermore, the number average molecular weight of the polyether polyol (a2) is preferably 4000 or less and more preferably 3000 or less. When the number average molecular weight is within any of these ranges, excellent mechanical stability is achieved.

The polyol (a) that is used in the polyurethane resin of the present embodiment may include one or more other polyols, in addition to the polyester polyol (a1) and the polyether polyol (a2). Examples of the other polyols include, but are not limited to, ethylene glycol, propylene glycol, butanediol, hexanediol, neopentyl glycol, bisphenol compounds, and trimethylolpropane. Examples of the bisphenol compounds include bisphenol A, bisphenol S, and bisphenol F.

<Polyisocyanate (b)>

The polyisocyanate (b) that is used in the polyurethane resin of the present embodiment is not particularly limited and may be, for example, an aliphatic polyisocyanate, an alicyclic polyisocyanate, an aromatic polyisocyanate, an aromatic-aliphatic polyisocyanate, or the like.

Examples of the aliphatic polyisocyanate include, but are not limited to, tetramethylene diisocyanate, dodecamethylene diisocyanate, hexamethylene diisocyanate (HDI), 2,2,4-trimethylhexamethylene diisocyanate, 2,4,4-trimethylhexamethylene diisocyanate, lysine diisocyanate, 2-methylpentane-1,5-diisocyanate, and 3-methylpentane-1,5-diisocyanate.

Examples of the alicyclic polyisocyanate include, but are not limited to, isophorone diisocyanate (IPDI), hydrogenated xylylene diisocyanate, 4,4'-dicyclohexylmethane diisocyanate, 1,4-cyclohexane diisocyanate, methylcyclohexylene diisocyanate, and 1,3-bis(isocyanatomethyl)cyclohexane.

Examples of the aromatic polyisocyanate include, but are not limited to, tolylene diisocyanate (TDI), 2,2'-diphenylmethane diisocyanate, 2,4'-diphenylmethane diisocyanate, 4,4'-diphenylmethane diisocyanate (MDI), polymethylene polyphenyl polyisocyanate, 4,4'-dibenzyl diisocyanate, 1,5-naphthylene diisocyanate, xylylene diisocyanate, 1,3-phenylene diisocyanate, and 1,4-phenylene diisocyanate.

Examples of the aromatic-aliphatic polyisocyanate include, but are not limited to, dialkyldiphenylmethane diisocyanate, tetraalkyldiphenylmethane diisocyanate, and $\alpha,\alpha,\alpha,\alpha$-tetramethylxylylene diisocyanate.

The polyisocyanate (b) may be a modified product of any of the above-mentioned organic polyisocyanates. Examples of the modified product of an organic polyisocyanate include, but are not limited to, carbodiimides, allophanates, biurets, isocyanurates, and adducts. One polyisocyanate may be used alone, or two or more polyisocyanates may be used in combination.

From the standpoint of providing excellent sizing properties and yellowing resistance, it is preferable that the polyisocyanate (b) include at least one of an aliphatic polyisocyanate or an alicyclic polyisocyanate, and it is preferable that the polyisocyanate (b) include at least one selected from hexamethylene diisocyanate, isophorone diisocyanate, and dicyclohexylmethane diisocyanate.

<Compound (c)>

The compound (c) that is used in the polyurethane resin of the present embodiment contains at least one of a sulfonic acid group or a sulfonate group and contains an active hydrogen group. In the present specification, the "active hydrogen group" is a functional group that reacts with an isocyanate group, and examples of the active hydrogen group include hydroxy groups, primary amino groups, and secondary amino groups. Preferably, the active hydrogen group is a hydroxy group.

The compound (c) may be, for example, a polyester polyol containing at least one of a sulfonic acid group or a sulfonate group. The polyester polyol containing at least one of a sulfonic acid group or a sulfonate group can be prepared, for example, by replacing at least a portion of the dicarboxylic acid used in the above-described polyester polyol (a1), with a dicarboxylic acid containing at least one of a sulfonic acid group or a sulfonate group.

Examples of dicarboxylic acids containing a sulfonic acid group include, but are not limited to, 5-sulfoisophthalic acid, 2-sulfoterephthalic acid, 4-sulfophthalic acid, and 5-[4-sulfophenoxy] isophthalic acid. Examples of dicarboxylic acids containing a sulfonate group include dicarboxylic acids containing a metal sulfonate group and dicarboxylic acids containing an ammonium sulfonate group. Examples of the dicarboxylic acids containing a metal sulfonate group include, but are not limited to, sodium 5-sulfoisophthalate, sodium 2-sulfoterephthalate, sodium 4-sulfophthalate, 5-[4-sodium sulfophenoxy] isophthalic acid, potassium 5-sulfoisophthalate, potassium 2-sulfoterephthalate, potassium 4-sulfophthalate, and 5-[4-potassium sulfophenoxy] isophthalic acid. Examples of the dicarboxylic acids containing a ammonium sulfonate group include, but are not limited to, ammonium 5-sulfoisophthalate, ammonium 2-sulfoterephthalate, ammonium 4-sulfophthalate, 5-[4-ammonium sulfophenoxy] isophthalic acid, triethylammonium 5-sulfoisophthalate, triethylammonium 2-sulfoterephthalate, triethylammonium 4-sulfophthalate, and 5-[4-triethylammonium sulfophenoxy] isophthalic acid.

Furthermore, the polyester polyol containing at least one of a sulfonic acid group or a sulfonate group can be prepared, for example, by replacing at least a portion of the dicarboxylic acid used in the above-described polyester polyol (a1), with a dialkyl ester of a dicarboxylic acid containing at least one of a sulfonic acid group or a sulfonate group.

Examples of the dialkyl ester of a dicarboxylic acid containing at least one of a sulfonic acid group or a sulfonate group include dimethyl esters of the above-mentioned dicarboxylic acid containing at least one of a sulfonic acid group or a sulfonate group and diethyl esters of the above-mentioned dicarboxylic acid containing at least one of a sulfonic acid group or a sulfonate group. Specific examples of dialkyl esters of a dicarboxylic acid containing at least one of a sulfonic acid group or a sulfonate group include dimethyl 5-sulfoisophthalate, diethyl 5-sulfoisophthalate, sodium dimethyl 5-sulfoisophthalate, potassium diethyl 5-sulfoisophthalate, ammonium dimethyl 5-sulfoisophthalate, and triethylammonium dimethyl 5-sulfoisophthalate. A preferred dialkyl ester of a dicarboxylic acid containing at least one of a sulfonic acid group or a sulfonate group is sodium dimethyl 5-sulfoisophthalate.

The polyester polyol containing at least one of a sulfonic acid group or a sulfonate group preferably has an average hydroxy number of 20 to 250 mgKOH/g, more preferably 30 to 120 mgKOH/g, and even more preferably 40 to 80 mgKOH/g. The average hydroxy number can be measured by a neutralization titration method in accordance with JIS K 0070:1992.

The compound (C) may be a compound containing at least one of a sulfonic acid group or a sulfonate group and containing an amino group as the active hydrogen group. Examples of such a compound (C) include amine compounds containing a sulfonic acid group, amine compounds containing an alkali metal sulfonate group, and amine compounds containing an ammonium sulfonate group. Examples of the amine compounds containing a sulfonic acid group include, but are not limited to, aminoethylsulfonic acid and aminoethylamino ethanesulfonic acid. Examples of the amine compounds containing an alkali metal sulfonate group include, but are not limited to, sodium aminoethylsulfonic acid, potassium aminoethylsulfonic acid, sodium aminoethylamino ethanesulfonic acid, and potassium aminoethylamino ethanesulfonic acid. Examples of the amine compounds containing an ammonium sulfonate group include, but are not limited to, ammonium aminoethylsulfonic acid, triethylammonium aminoethylsulfonic acid, ammonium aminoethylamino ethanesulfonic acid, and triethylammonium aminoethylamino ethanesulfonic acid. The compound containing at least one of a sulfonic acid group or a sulfonate group and containing an amino group as the active hydrogen group is preferably an amine compound containing an alkali metal sulfonate group and more preferably an amine compound containing a sodium sulfonate group.

The component of the polyether polyol (a2) is present in an amount of 10 parts by mass or greater and 30 parts by mass or less per 100 parts by mass of the total amount of the polyol (a) component, the polyisocyanate (b) component, and the compound (c) component. The component of the polyether polyol (a2) is preferably present in an amount of 11 parts by mass or greater and more preferably 12 parts by mass or greater per 100 parts by mass of the total amount of the polyol (a) component, the polyisocyanate (b) component, and the compound (c) component. The component of the polyether polyol (a2) is preferably present in an amount of 20 parts by mass or less and more preferably 15 parts by mass or less per 100 parts by mass of the total amount of the polyol (a) component, the polyisocyanate (b) component, and the compound (c) component.

Without limitation, a mass ratio (a1/a2) of the component of the polyester polyol (a1) to the component of the polyether polyol (a2) may be 2.0 or greater, which is preferable from the standpoint of providing excellent sizing properties. The mass ratio is more preferably 3.0 or greater and even more preferably 4.0 or greater. Furthermore, the mass ratio (a1/a2) of the component of the polyester polyol (a1) to the component of the polyether polyol (a2) may be 8.0 or less, which is preferable from the standpoint of providing excellent storage stability of the aqueous dispersion of the polyurethane resin. The mass ratio is more preferably 7.0 or less and even more preferably 6.0 or less.

Regarding ratios of the polyol (a) component, the polyisocyanate (b) component, and the compound (c) component, the ratio of isocyanate groups present in the polyisocyanate (b) component to 1 mole of total active hydrogen groups present in the polyol (a) component and the compound (c) component may be 1.01 moles or greater and 2 moles or less, which is preferable in terms of providing enhanced sizing properties. The ratio is more preferably 1.05 moles or greater and 1.7 moles or less and even more preferably 1.1 moles or greater and 1.5 moles or less. The number of moles of the active hydrogen group or the isocyanate group in each of the components can be calculated according to the following equation. In the instance where one component contains two or more compounds, the number of moles of the active hydrogen group or the isocyanate group can be determined as the sum of calculation results of the two or more compounds. In the equation below, Z is the number of moles of the active hydrogen group or the isocyanate group, F is the number of active hydrogen groups or isocyanate groups per molecule, W is an amount (g) of use, and M is a molecular weight or a number average molecular weight.

$$Z = (F \times W)/M$$

<Polyamine>

Any polyamine or no polyamine may be used in the polyurethane resin of the present embodiment. From the standpoint of providing excellent sizing properties, it is preferable that a polyamine be present in an amount of 0.3 parts by mass or less per 100 parts by mass of the total amount of the polyol (a) component, the polyisocyanate (b) component, the compound (c) component, and the polyamine component. The amount is more preferably 0.2 parts by mass or less, even more preferably 0.1 parts by mass or less, still more preferably 0.05 parts by mass or less, and particularly preferably 0 parts by mass. The polyurethane resin of the present embodiment is substantially free of any polyamine component. The expression "substantially free of any polyamine component" means that the polyamine component is present in an amount of 0.3 parts by mass or less per 100 parts by mass of the total amount of the polyol (a) component, the polyisocyanate (b) component, the compound (c) component, and the polyamine component.

Without limitation, the polyamine may be, for example, a chain extender that is commonly used in the art. Examples of the polyamine include diamines, triamines, and tetraamines. Examples of the diamines include ethylenediamine, trimethylenediamine, piperazine, and isophoronediamine. Examples of the triamines include diethylenetriamine and dipropylenetriamine. Examples of the tetraamines include triethylenetetramine.

<Others>

The fiber sizing agent of the present embodiment may include one or more other materials as long as the effects of the present invention are not hindered. Examples of the other materials include, but are not limited to, silane coupling agents and pH-adjusting agents.

Examples of the silane coupling agents include, but are not limited to, amino-group-containing silane coupling agents, such as γ-aminopropyltriethoxysilane, N-β-(aminoethyl)-γ-aminopropyltrimethoxysilane, N-β-(aminoethyl)-N'-β-(aminoethyl)-γ-aminopropyltriethoxysilane, and γ-anilinopropyltrimethoxysilane; epoxy-group-containing silane coupling agents, such as γ-glycidoxypropyltrimethoxysilane, γ-glycidoxypropyltriethoxysilane, and β-(3,4-epoxycyclohexyl)ethyltrimethoxysilane; vinyl-group-containing silane coupling agents, such as vinyltrimethoxysilane, vinyltriethoxysilane, and N-β-(N-vinylbenzylaminoethyl)-γ-aminopropyltrimethoxysilane; acrylic group- or methacrylic group-containing silane coupling agents, such as γ-methacryloxypropyltrimethoxysilane and γ-methacryloxypropyltriethoxysilane; and mercapto-group-containing silane coupling agents, such as γ-mercaptopropyltrimethoxysilane. These silane coupling agents may be used alone or in a combination of two or more.

Examples of the pH-adjusting agents include, but are not limited to, acetic acid, phosphate salts, citric acid, sodium citrate, and adipic acid.

<Production Method>

The aqueous dispersion of the polyurethane resin may be produced by any method, which may be a method known in the art. For example, first, an isocyanate-group-terminated urethane prepolymer is produced by reacting the polyol (a), the polyisocyanate (b), and the compound (c) with one another in a solvent. Examples of the solvent include, but are not limited to, acetone, methyl ethyl ketone, tetrahydrofuran, dioxane, and ethyl acetate. Subsequently, if necessary, the sulfonic acid group of the compound (c) is neutralized with triethylamine, sodium hydroxide, potassium hydroxide, or the like. Next, the isocyanate-group-terminated urethane prepolymer is dispersed in water, to which an emulsifying agent (d) may be added if necessary, and during which a polyamine (e) may be added if necessary to cause a chain extension reaction. In this manner, emulsification is carried out. Subsequently, the solvent is evaporated under reduced pressure, and, accordingly, an aqueous dispersion of a polyurethane resin can be prepared.

The emulsifying agent (d) may be a nonionic surfactant, examples of which include polyoxyalkylene glycols, such as polyoxyethylene polyoxypropylene glycol; polyoxyalkylene styrenated phenyl ethers, such as polyoxyethylene styrenated phenyl ether; polyoxyalkylene alkyl ethers, such as polyoxyethylene tridecyl ether and polyoxyethylene lauryl ether; and polyoxyalkylene fatty acid esters, such as polyoxyethylene sorbitan monococoate, polyoxyethylene sorbitan monostearate, and polyoxyethylene hydrogenated castor oil. These may be used alone or in a combination of two or more. Among these, polyoxyalkylene glycols and polyoxyalkylene fatty acid esters are preferable because of their excellent storage stability, mechanical stability, thermal stability, and sizing properties.

Preferably, an amount of use of the emulsifying agent (d) is 0.5 to 10 parts by mass, and more preferably, 1 to 5 parts by mass, per 100 parts by mass of the solids in the aqueous dispersion of the polyurethane resin.

The fiber sizing agent of the present invention may be produced by any method, which may be a method known in the art. For example, the fiber sizing agent can be produced by a process in which an aqueous dispersion of a polyurethane resin is, if necessary, mixed with a silane coupling agent, a pH-adjusting agent, and the like, and further, water is added to achieve a predetermined concentration.

In the fiber sizing agent of the present embodiment, the concentration of the polyurethane resin is not particularly limited; the concentration is, for example, preferably 1 mass% or greater and more preferably 3 mass% or greater and is preferably 20 mass% or less and more preferably 15 mass% or less.

A total amount of sulfonic acid groups and sulfonate groups present in the polyurethane resin is not particularly limited; the total amount is, for example, preferably 0.02 mmol or greater, more preferably 0.03 mmol or greater, and even more preferably 0.04 mmol or greater, per gram of solids in the polyurethane resin. The total amount of sulfonic acid groups and sulfonate groups present in the polyurethane resin is preferably 0.15 mmol or less, more preferably 0.10 mmol or less, and even more preferably 0.07 mmol or less, per gram of solids in the polyurethane resin. The calculation of the total amount of sulfonic acid groups and sulfonate groups present in 1 g of the polyurethane resin (hereinafter also referred to as an "amount of sulfonic acid groups and sulfonate groups") can be carried out in a manner described later.

The fiber sizing agent of the present embodiment can be used, for example, in glass fibers, carbon fibers, silicon carbide fibers, pulp, hemp, cotton, nylon, polyester, acrylic, polyimide, polyamide fibers, and the like. The polyamide fibers may be aramids and the like, examples of which include Kevlar (registered trademark) and Nomex (registered trademark). Preferably, the fiber sizing agent of the present embodiment is used in a glass fiber sizing agent. Glass fibers can be treated with the glass fiber sizing agent by any method. An example of the method is as follows. Molten glass is drawn into filaments through multiple nozzles provided in a bottom portion of a melting furnace, to form a bundle of glass filaments. In this bundling process, the glass fiber sizing agent is applied with a roll coater or a spray to carry out the bundling, and the bundle of glass filaments is then taken up and dried. Alternatively, after the glass fiber sizing agent is applied to the glass filaments, the resultant may be cut into predetermined lengths, and thereafter, the glass filaments may be dried.

EXAMPLES

The present invention will now be described in more detail with reference to Examples. Note that the present invention is in no way limited to the Examples described below. In the Examples and Comparative Examples described below, "parts" are parts by mass unless otherwise specified.

<Reagents Used>

Polyester polyol (a1)

(a1-1)
Polyester polyol with a number average molecular weight of 2000 prepared from a dicarboxylic acid and a diol, where the dicarboxylic acid was a mixture of adipic acid and terephthalic acid (molar ratio: 1/1), and the diol was a neopentyl glycol
(a1-2)
Polyester polyol with a number average molecular weight of 2000 prepared from a dicarboxylic acid and a diol, where the dicarboxylic acid was a mixture of adipic acid and terephthalic acid (molar ratio: 1/1), and the diol was a hexylene glycol

Polyether polyol (a2)

(a2-1)
Polyoxyethylene polyoxypropylene glycol (number average molecular weight: 3000, prepared by block addition of propylene oxide and ethylene oxide (mass ratio: 50/50) in this order)
(a2-2)
Polyethylene glycol (number average molecular weight: 600)
(a2-3)
Polyethylene glycol (number average molecular weight: 400)

Polyisocyanate (b)

(b-1)
Hexamethylene diisocyanate
(b-2)
Isophorone diisocyanate
(b-3)
Dicyclohexylmethane diisocyanate

Compound (c)

(c-1)
Sodium aminoethylsulfonic acid
(c-2)
Sodium aminoethylamino ethanesulfonic acid
(c-3)
Polyester polyol containing sodium sulfonate prepared in Synthesis Example 1, described below
(c-4)
Aminoethylsulfonic acid

(Synthesis Example 1)

1100 parts by mass of adipic acid, 900 parts by mass of 1,6-hexanediol, and 0.5 parts by mass of tetrabutyl titanate were added to a reaction vessel equipped with a thermometer, a nitrogen gas inlet tube, and a stirrer, while nitrogen gas was bubbled through the reaction vessel. Subsequently, in a state in which a reaction temperature was set at 165°C so that a column top temperature could be 55°C, a reaction was carried out until an acid number of 0.3 mgKOH/g or less was reached.

Next, a reaction was carried out for 2 hours under reduced pressure conditions of 5 kPa at 180°C. Thus, a polyester polyol having an average hydroxy number of 112 mgKOH/g and an acid number of 0.2 mgKOH/g was prepared. Subsequently, 267 parts by mass of sodium dimethyl 5-sulfoisophthalate and 4 parts by mass of tetrabutyl titanate were added to 2000 parts by mass of the polyester polyol, and a reaction was carried out in a state in which a reaction temperature was set at 175°C so that a column top temperature could be 60°C. Thus, a polyester polyol containing sodium sulfonate and having an average hydroxy number of 53 mgKOH/g and an acid number of 0.3 mgKOH/g was prepared.

Emulsifying agent (d)

(d-1)
Polyoxyethylene sorbitan fatty acid ester (product name: Sorgen TW-20, manufactured by DKS Co. Ltd.)
(d-2)
Polyoxyethylene polyoxypropylene glycol (product name: Epan U-108, manufactured by DKS Co. Ltd.)
(d-3)
Polyoxyethylene hydrogenated castor oil (product name: Noigen HC-400, manufactured by DKS Co. Ltd.)

Polyamine (e)

(e-1)
Diethylenetriamine
(e-2)
Ethylenediamine

<Example 1>

72.8 parts by mass of the polyester polyol (a1-1), 13.5 parts by mass of the polyether polyol (a2-1), 10 parts by mass of the polyisocyanate (b-1), and 60 parts by mass of methyl ethyl ketone as a solvent were added to a four-neck flask equipped with a stirrer, a reflux condenser, a thermometer, and a nitrogen inlet tube, and the contents were then allowed to react at 75°C for 4 hours. Subsequently, 6 parts by mass of an aqueous solution containing 0.8 parts by mass of the compound (c-1) was further added to the flask, and the contents were then allowed to react at 45°C for 30 minutes. In this manner, a solution, in methyl ethyl ketone, of an isocyanate-group-terminated urethane prepolymer (A) containing at least one of a sulfonic acid group or a sulfonate group was prepared. This solution had a free isocyanate content of 1.2%. The free isocyanate content was measured in accordance with JIS K 7301-1995.

Furthermore, 2.9 parts by mass of the emulsifying agent (d-1) was added to the solution and then mixed, and further, 120 parts by mass of water was added to emulsify and disperse the mixture. Subsequently, the methyl ethyl ketone was evaporated under reduced pressure to afford an aqueous dispersion of a polyurethane resin having a solids content of 30 mass%. An evaluation of storage stability was performed on the aqueous dispersion of the polyurethane resin.

Furthermore, a glass fiber sizing agent containing 9 mass% of the polyurethane resin was prepared as follows. 100 parts by mass of the aqueous dispersion of the polyurethane resin, 5 parts by mass of 3-glycidoxypropyltriethoxysilane (trade name: KBE-403, manufactured by Shin-Etsu Chemical Co., Ltd.) as a silane coupling agent, 0.2 parts by mass of acetic acid as a pH-adjusting agent, and 450 parts by mass of water were mixed together, and the mixture was then stirred with a propeller mixer (rotational speed: 300 rpm) at 25°C for 30 minutes. Evaluations of mechanical stability, thermal stability, and sizing properties were performed on the glass fiber sizing agent.

<Examples 2 to 13 and Comparative Examples 1 and 2>

Glass fiber sizing agents were prepared by performing the same operation as that of Example 1, except that the raw materials and their starting amounts were as shown in the tables.

<Example 14>

The production of an aqueous dispersion of a polyurethane resin was performed as follows. After the emulsification and dispersion, 10 parts by mass of an aqueous solution containing 0.3 parts by mass of the polyamine (e-2) was added, and the contents were then allowed to react at 30°C for 60 minutes. Subsequently, the methyl ethyl ketone was evaporated under reduced pressure to afford an aqueous dispersion of a polyurethane resin having a solids content of 30 mass%. A glass fiber sizing agent was prepared by performing the same operation as that of Example 1, except that the production method just described was used and that the raw materials and their starting amounts were as shown in the table.

<Example 15>

The production of an aqueous dispersion of a polyurethane resin was performed as follows. After the emulsification and dispersion, 10 parts by mass of an aqueous solution containing 0.3 parts by mass of the polyamine (e-1) was added, and the contents were then allowed to react at 30°C for 60 minutes. Subsequently, the methyl ethyl ketone was evaporated under reduced pressure to afford an aqueous dispersion of a polyurethane resin having a solids content of 30 mass%. A glass fiber sizing agent was prepared by performing the same operation as that of Example 1, except that the production method just described was used and that the raw materials and their starting amounts were as shown in the table.

<Manner of Calculating Solids Content of Polyurethane Resin>

Approximately 2.5 g of the aqueous dispersion of the polyurethane resin was placed in a glass petri dish having a diameter of 5 cm, which was then placed in an oven at 105°C to heat the aqueous dispersion for 3 hours. The solids content is a mass ratio (%) of the amount of the residue, which is the amount after heating, to the amount of the aqueous dispersion, which is the amount before heating.

<Amount of Sulfonic Acid Groups and Sulfonate Groups>

The total amount (mmol) of sulfonic acid groups and sulfonate groups present in 1 g of the polyurethane resin was calculated based on the amounts of use of the raw materials that formed the polyurethane resin.

<Number of NCO Groups in (b) Component/Number of Active Hydrogen Groups in the polyol (a) component and the compound (c) component>

The ratio of isocyanate groups present in the polyisocyanate (b) component to 1 mole of total active hydrogen groups present in the polyol (a) component and the compound (c) component was calculated based on the amounts of use of the raw materials that formed the polyurethane resin and the equation described above.

<Storage Stability>

50 g of the prepared aqueous dispersion of the polyurethane resin was placed in a glass vial (body diameter: 35 mm, full length: 78 mm), and subsequently, the vial was allowed to stand in an oven at 60°C for 3 days. Subsequently, a diluted aqueous solution containing 5 mass% of the aqueous dispersion of the polyurethane resin was prepared. Subsequently, the aqueous solution was stirred, and thereafter, 100 g of the aqueous solution was placed in a glass vial (body diameter: 40 mm, full length: 120 mm), which was then capped. Subsequently, the glass vial was allowed to stand in a vibration-free location at a temperature of 18°C to 25°C for 24 hours. Subsequently, an examination was performed to see whether there was sedimentation of particles in the glass vial. In the instance where there was sedimentation, a height (mm) of the sedimentation was measured. In the instance where there was no sedimentation, the height was determined to be 0 mm. The height of the sedimentation was expressed in mm.
The storage stability was evaluated as follows. For all the evaluation categories below, "A" is the most favorable.

A: less than 2.5 mm
B: 2.5 mm or greater and less than 4.5 mm
C: 4.5 mm or greater and less than 7.5 mm
D: 7.5 mm or greater

<Mechanical Stability>

500 g of the prepared glass fiber sizing agent was stirred in a blender (trade name: Abitelax AM-808, manufactured by Yoshii Electric Co., Ltd.) for 15 minutes and subsequently filtered through a 50-μm wire mesh. The residue was dried at 105°C for 3 hours, and the mass of the residue was measured. Subsequently, a ratio (mass%) of the mass of the residue to the mass of the solids in the glass fiber sizing agent was calculated. Thus, the mass ratio of aggregates was measured.
The mechanical stability was evaluated as follows.

A: less than 3.5 mass%
B: 3.5 mass% or greater and less than 5.5 mass%

C: 5.5 mass% or greater

<Thermal Stability>

The prepared glass fiber sizing agent was applied to release paper in a manner such that a dry thickness of 200 μm could be achieved, and subsequently, the release paper was dried at 105°C for 3 hours. In this manner, a test specimen was prepared. The test specimen was allowed to stand at 20°C and 20% RH for 18 hours to be thoroughly dried. Subsequently, the mass of the test specimen was measured. Subsequently, the mass at the time at which a temperature of 350°C was reached was measured with a thermogravimetric analyzer (trade name: Thermo plus EVO TG8120 (manufactured by Rigaku Corporation), under conditions including an initial temperature of 20°C, a heating rate of 10°C/min, and a nitrogen atmosphere. Thus, a percentage (mass%) of loss in mass from before to after the test was measured.

The thermal stability was evaluated as follows.

A: less than 10.5 mass%
B: 10.5 mass% or greater and less than 12.5 mass%
C: 12.5 mass% or greater and less than 16.5 mass%
D: 16.5 mass% or greater

<Sizing Properties>

The glass fiber sizing agent was applied to a surface of an E-glass fiber having a diameter of 13 μm in a manner such that the mass of the solids could be 1 mass% relative to the mass of the glass fiber. 2000 filaments of this glass fiber were bundled together, and subsequently, the bundle was cut into lengths of 3 mm and dried. In this manner, chopped strands were prepared. 300 g of the chopped strands were placed in a 1-L beaker and subsequently stirred with a propeller mixer (rotational speed: 500 rpm) for 15 minutes. Subsequently, the chopped strands were sieved through a 3.35-mm mesh sieve, and the mass of the solids retained on the sieve was measured. In this manner, a ratio (mass%) of fluff was determined.

The sizing properties were evaluated as follows.

A: less than 0.25 mass%
B: 0.25 mass% or greater and less than 0.45 mass%
C: 0.45 mass% or greater and less than 0.95 mass%
D: 0.95 mass% or greater

[Table 1]

| | | | Examples | | | | | | | | |
|---|---|---|---|---|---|---|---|---|---|---|---|
| | | | 1 | 2 | 3 | 4 | 5 | 6 | 7 | 8 | 9 |
| Polyol (a) | Polyester polyol (a1) | a1-1 | 72.8 | 75.5 | 59.3 | 72.8 | 72.8 | 72.5 | 66.5 | 72.9 | 70.3 |
| | | a1-2 | | | | | | | | | |
| | Polyether polyol (a2) | a2-1 | 13.5 | 10.8 | 27 | 13.5 | 13.5 | 13.5 | 14.3 | 13.5 | 13.0 |
| | | a2-2 | | | | | | | | | |
| | | a2-3 | | | | | | | | | |
| Polyisocyanate (b) | | b-1 | 10 | 10 | 10 | 10 | 10 | 10 | 9.8 | 10 | |
| | | b-2 | | | | | | | | | 13 |
| | | b-3 | | | | | | | | | |
| Compound (c) | | c-1 | 0.8 | 0.8 | 0.8 | 0.8 | 0.8 | | | | 0.8 |
| | | c-2 | | | | | | 1.1 | | | |
| | | c-3 | | | | | | | 6.5 | | |
| | | c-4 | | | | | | | | 0.7 | |

(continued)

| | | | Examples | | | | | | | | |
|---|---|---|---|---|---|---|---|---|---|---|---|
| | | | 1 | 2 | 3 | 4 | 5 | 6 | 7 | 8 | 9 |
| Emulsifying agent (d) | | d-1 | 2.9 | 2.9 | 2.9 | | | 2.9 | 2.9 | 2.9 | 2.9 |
| | | d-2 | | | | 2.9 | | | | | |
| | | d-3 | | | | | 2.9 | | | | |
| Polyamine (e) | | e-1 | | | | | | | | | |
| | | e-2 | | | | | | | | | |
| Aqueous dispersion of polyurethane resin | Amount of sulfonic acid groups and sulfonate groups [mmol/g] | | 0.06 | 0.06 | 0.06 | 0.06 | 0.06 | 0.06 | 0.06 | 0.06 | 0.06 |
| | Number of NCO groups in (b)/Number of active hydrogen groups in (a) and (c) | | 1.36 | 1.35 | 1.44 | 1.36 | 1.36 | 1.28 | 1.42 | 1.36 | 1.39 |
| | Ratio (a1/a2) | | 5.4 | 7.0 | 2.2 | 5.4 | 5.4 | 5.4 | 4.7 | 5.4 | 5.4 |
| | a2/(a+b+c) [%] | | 13.9 | 11.1 | 27.8 | 13.9 | 13.9 | 13.9 | 14.7 | 13.9 | 13.4 |
| | Evaluation | Storage stability | A | B | A | B | B | A | A | B | A |
| Fiber sizing agent | Evaluation | Mechanical stability | A | A | A | B | B | B | B | A | A |
| | | Thermal stability | A | A | B | A | A | B | B | A | C |
| | | Sizing properties | A | A | B | A | A | A | A | B | A |

[Table 2]

| | | | Examples | | | | | | Comparative Examples | |
|---|---|---|---|---|---|---|---|---|---|---|
| | | | 10 | 11 | 12 | 13 | 14 | 15 | 1 | 2 |
| Polyol (a) | Polyester polyol (a1) | a1-1 | 69 | 69.7 | 68 | | 72.6 | 72.5 | 82.5 | 51.5 |
| | | a1-2 | | | | 72.8 | | | | |
| | Polyether polyol (a2) | a2-1 | 12.3 | | | 13.5 | 13.5 | 13.5 | 3.4 | 35.1 |
| | | a2-2 | | 13.5 | | | | | | |
| | | a2-3 | | | 13.5 | | | | | |
| Polyisocyanate (b) | | b-1 | | 13.1 | 14.8 | 10 | 9.9 | 10.0 | 10.4 | 9.7 |
| | | b-2 | | | | | | | | |
| | | b-3 | 15 | | | | | | | |
| Compound (c) | | c-1 | 0.8 | 0.8 | 0.8 | 0.8 | 0.8 | 0.8 | 0.8 | 0.8 |
| | | c-2 | | | | | | | | |
| | | c-3 | | | | | | | | |
| | | c-4 | | | | | | | | |

(continued)

| | | | Examples | | | | | | Comparative Examples | |
|---|---|---|---|---|---|---|---|---|---|---|
| | | | 10 | 11 | 12 | 13 | 14 | 15 | 1 | 2 |
| Emulsifying agent (d) | | d-1 | 2.9 | 2.9 | 2.9 | 2.9 | 2.9 | 2.9 | 2.9 | 2.9 |
| | | d-2 | | | | | | | | |
| | | d-3 | | | | | | | | |
| Polyamine (e) | | e-1 | | | | | | 0.3 | | |
| | | e-2 | | | | | 0.3 | | | |
| Aqueous dispersion of polyurethane resin | Amount of sulfonic acid groups and sulfonate groups [mmol/g] | | 0.05 | 0.06 | 0.06 | 0.06 | 0.06 | 0.06 | 0.06 | 0.06 |
| | Number of NCO groups in (b)/Number of active hydrogen groups in (a) and (c) | | 1.39 | 1.30 | 1.25 | 1.36 | 1.36 | 1.36 | 1.37 | 1.44 |
| | Ratio (a1/a2) | | 5.6 | 5.2 | 5.0 | 5.4 | 5.4 | 5.4 | 24.3 | 1.5 |
| | a2/(a+b+c) [%] | | 12.7 | 13.9 | 13.9 | 13.9 | 13.9 | 13.9 | 3.5 | 36.1 |
| | Evaluation | Storage stability | A | B | B | A | A | A | D | A |
| Fiber sizing agent | Evaluation | Mechanical stability | A | A | A | A | A | A | A | A |
| | | Thermal stability | C | B | B | A | A | A | A | C |
| | | Sizing properties | B | B | B | A | B | B | A | D |

The following observation was made from the results shown in the tables. In the Examples, the fiber sizing agents containing an aqueous dispersion of a polyurethane resin were those in which the polyol (a) component included a polyester polyol (a1) and a polyether polyol (a2), and the component of the polyether polyol (a2) was present in an amount of 10 parts by mass or greater and 30 parts by mass or less per 100 parts by mass of the total amount of the polyol (a) component, the polyisocyanate (b) component, and the compound (c) component, as opposed to the Comparative Examples. It was found that in the Examples, better sizing properties and better storage stability of the aqueous dispersion of a polyurethane resin used in the fiber sizing agent were achieved than in the Comparative Examples.

The present invention is not limited to the embodiments described above and can have various configurations without departing from the spirit of the invention. For example, the technical features described in the embodiments and the Examples corresponding to the technical features of the aspects described in the "Summary of Invention" section may be appropriately replaced and/or combined, to solve some or all of the problems described above, or to achieve some or all of the effects described above. In addition, some of the technical features may be omitted if appropriate, unless they are described as being essential in the present specification.

## Claims

1. A fiber sizing agent comprising an aqueous dispersion of a polyurethane resin, the polyurethane resin comprising, as constituent components,

    a polyol (a) component containing no sulfonic acid group or sulfonate group;
    a polyisocyanate (b) component; and
    a compound (c) component containing at least one of a sulfonic acid group or a sulfonate group and containing an active hydrogen group, wherein
    the polyol (a) component comprises a polyester polyol (a1) and a polyether polyol (a2), and

a component of the polyether polyol (a2) is present in an amount of 10 parts by mass or greater and 30 parts by mass or less per 100 parts by mass of a total amount of the polyol (a) component, the polyisocyanate (b) component, and the compound (c) component.

2. The fiber sizing agent according to Claim 1, wherein a mass ratio (a1/a2) of a component of the polyester polyol (a1) to the component of the polyether polyol (a2) is 2.0 or greater and 8.0 or less.

3. The fiber sizing agent according to Claim 1 or 2,
wherein the polyisocyanate (b) component comprises at least one of an aliphatic polyisocyanate or an alicyclic polyisocyanate.

4. The fiber sizing agent according to Claim 1 or 2,
wherein a ratio of isocyanate groups present in the polyisocyanate (b) component to 1 mole of total active hydrogen groups present in the polyol (a) component and the compound (c) component is 1.01 moles or greater and 2 moles or less.

5. The fiber sizing agent according to Claim 1 or 2,
wherein the polyurethane resin is substantially free of any polyamine component.

6. The fiber sizing agent according to Claim 1 or 2,
wherein the fiber sizing agent is for use in a glass fiber.

## INTERNATIONAL SEARCH REPORT

| International application No. |
| --- |
| **PCT/JP2023/026929** |

| A. | CLASSIFICATION OF SUBJECT MATTER |
| --- | --- |

*D06M 15/564*(2006.01)i; *C03C 25/10*(2018.01)i; *C08G 18/00*(2006.01)i; *C08G 18/08*(2006.01)i; *C08G 18/40*(2006.01)i; *C08G 18/73*(2006.01)i; *C08G 18/75*(2006.01)i

FI: D06M15/564; C08G18/00 C; C08G18/08 019; C08G18/40 018; C08G18/73; C08G18/75; C03C25/10

According to International Patent Classification (IPC) or to both national classification and IPC

| B. | FIELDS SEARCHED |
| --- | --- |

Minimum documentation searched (classification system followed by classification symbols)

D06M15/564; C03C25/10; C08G18/00; C08G18/08; C08G18/40; C08G18/73; C08G18/75

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 09-241348 A (BAYER AG) 16 September 1997 (1997-09-16) | 1-6 |
|  | claims, paragraphs [0003], [0008], [0013], [0014], [0024], [0029]-[0040], examples | |
| Y | | 1-6 |
| X | JP 52-62400 A (BAYER AG) 23 May 1977 (1977-05-23) | 1-6 |
|  | claims, p. 10, upper right column, line 12 to lower right column, line 16, p. 11, upper right column, line 1 to p. 16, upper left column, line 6, example 14 | |
| Y | | 1-6 |
| A | JP 2013-253364 A (DAI ICHI KOGYO SEIYAKU CO LTD) 19 December 2013 (2013-12-19) | 1-6 |
|  | claims, examples, entire text | |
| A | JP 2009-203316 A (ADEKA CORP) 10 September 2009 (2009-09-10) | 1-6 |
|  | claims, examples, entire text | |
| A | JP 11-504965 A (BAYER AG) 11 May 1999 (1999-05-11) | 1-6 |
|  | claims, examples, entire text | |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **10 October 2023** | **24 October 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/026929**

| Patent document cited in search report | | | Publication date (day/month/year) | Patent family member(s) | | | Publication date (day/month/year) |
|---|---|---|---|---|---|---|---|
| JP | 09-241348 | A | 16 September 1997 | JP | 9-241347 | A | |
| | | | | US | 5922806 | A | |
| | | | | claims, column 1, lines 26-32, column 3, lines 9-26, column 4, line 55 to column 5, line 17, column 8, lines 33-57, column 10, line 30 to column 13, line 57, examples | | | |
| | | | | US | 5804647 | A | |
| | | | | EP | 0792899 | A1 | |
| | | | | EP | 0792900 | A1 | |
| | | | | DE | 19607853 | A | |
| | | | | DE | 19611850 | A | |
| | | | | CA | 2198445 | A1 | |
| | | | | CA | 2198567 | A1 | |
| | | | | KR | 10-0468548 | B1 | |
| JP | 52-62400 | A | 23 May 1977 | US | 4092286 | A | |
| | | | | claims, column 11, line 67 to column 12, line 43, column 13, line 1 to column 19, line 6, example 14 | | | |
| | | | | GB | 1503299 | A | |
| | | | | DE | 2551094 | A | |
| | | | | FR | 2331581 | A | |
| | | | | BE | 848259 | A | |
| | | | | CH | 622813 | A | |
| | | | | AU | 1948676 | A | |
| JP | 2013-253364 | A | 19 December 2013 | CN | 103387344 | A | |
| | | | | CN | 107586049 | A | |
| JP | 2009-203316 | A | 10 September 2009 | US | 2011/0008628 | A1 | |
| | | | | claims, examples | | | |
| | | | | WO | 2009/107325 | A1 | |
| | | | | DE | 112009000463 | B | |
| | | | | CN | 101952344 | A | |
| | | | | KR | 10-2010-0126321 | A | |
| | | | | TW | 200940585 | A | |
| JP | 11-504965 | A | 11 May 1999 | US | 5961906 | A | |
| | | | | claims, examples | | | |
| | | | | WO | 1996/035733 | A1 | |
| | | | | EP | 0824557 | A1 | |
| | | | | DE | 19517185 | A | |

Form PCT/ISA/210 (patent family annex) (January 2015)

**EP 4 570 985 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013253364 A